# EUROPÄISCHE PATENTSCHRIFT

(11) **EP 2 711 448 B1**
(45) Veröffentlichungstag und Bekanntmachung des Hinweises auf die Patenterteilung: **22.07.2015**
(21) Anmeldenummer: 12185390.7
(22) Anmeldetag: 21.09.2012
(51) Int. Cl.: D05B 91/12

(54) **Behälter zur Aufbewahrung von Bruchstücken einer Nadel, Wagen für den Austausch von Nadeln und Verfahren zur Qualitätssicherung beim Nähen eines Textilteils**
Container for storing fragments of a needle, cart for exchanging needles and quality assurance method when sewing a textile part
Récipient destiné à la conservation des fragments d'une aiguille, chariot pour l'échange d'aiguilles et procédé d'assurance qualité lors de la couture d'une pièce textile

(43) Veröffentlichungstag der Anmeldung: 26.03.2014
(73) Patentinhaber: Groz-Beckert KG, 72458 Albstadt (DE)
(72) Erfinder: Schmidt, Reiner, 72459 Albstadt (DE); Tarique Gunasekera, Stanley, 72459 Albstadt (DE)
(74) Vertreter: Rüger, Barthelt & Abel

(56) Entgegenhaltungen:
- FR-A3- 2 557 438
- GB-A- 649 678
- GB-A- 805 628
- IT-B- 1 225 589
- US-A- 3 896 749
- US-A- 3 982 631
- US-A- 4 664 302
- US-A- 4 796 780
- US-A1- 2006 076 744
- US-A1- 2011 068 562

## Beschreibung

Bei der vorliegenden Erfindung geht es um ein Verfahren zur Qualitätssicherung beim Nähen eines Textilteils, beispielsweise eines Kleidungsstücks. Ferner betrifft die Erfindung auch einen Wagen, der dazu dient, einen Nadeltausch einer beschädigten, verschlissenen oder gebrochenen Nadel gegen eine neue Ersatznadel bei dem Verfahren auszuführen.

FR 2 557 438 A3 beschreibt einen Wagen mit einer Innenraum, der einen ersten Aufbewahrungsbereich, einen zweiten Aufbewahrungsbereich und einen dritten Aufbewahrungsbereich, wobei alle Aufbewahrungsbereiche voneinander getrennt sind.

Aus IT 1225589 B ist eine Strickmaschine bekannt, bei der Magnete zum Entfernen von metallischen Bruchstücken aus dem Gestrick vorgesehen sind.

Beim Nähen von Textilteilen durchläuft ein textiles Werkstück sequenziell mehrere Arbeitsstationen und wird nach und nach fertig gestellt. Der Herstellungsprozess wird unterbrochen, wenn an einer Arbeitsstation ein Fehler auftritt, beispielsweise eine Nähnadel bricht. Der Nähvorgang dieser Arbeitsstation kann nicht weitergeführt werden. Da die im Arbeitsablauf davor angeordneten Arbeitsstationen fehlerfrei weiterarbeiten, stauen sich die textilen Werkstücke an der vom Nadelbruch betroffenen Arbeitsstation. Umgekehrt erhalten die nachfolgenden Arbeitsstationen keine weiteren Werkstücke und können schließlich ebenfalls nicht mehr weiterarbeiten.

Im Falle eines Nadelbruchs an einer Arbeitsstation muss sichergestellt werden, dass alle Bruchstücke der Nadel gefunden wurden und kein Bruchstück in dem textilen Werkstück und mithin im herzustellenden Textilteil verbleibt. Die Prüfung nimmt Zeit in Anspruch und blockiert den Herstellungsprozess. Aus diesem Grund kann es als Aufgabe der Erfindung angesehen werden die Qualitätssicherung beim Nähprozess zu verbessern und insbesondere die Entfernung aller Bruchstücke der gebrochenen Nadel aus der betroffenen Arbeitsstationen oder den Austausch einer beschädigten Nadel so schnell wie möglich durchzuführen, um den Herstellungsprozess zügig wieder aufnehmen zu können.

Zur Lösung dieser Aufgabe wird erfindungsgemäß vorgeschlagen, einen zwischen den Arbeitsstationen bewegbaren Wagen vorzusehen. Im Falle eines Nadelbruches oder eine Beschädigung der Nadel an einer Arbeitsstation wird der Wagen an die betroffene Arbeitsstation gefahren. Der Wagen dient zur Aufnahme der beschädigten Nadel bzw. der Bruchstücke der gebrochenen Nähnadel und stellt gleichzeitig eine Ersatznähnadel für die Arbeitsstation bereit. Die an der Arbeitsstation arbeitende Person ist daher nicht gezwungen, die Arbeitsstation zu verlassen und an zentraler Stelle die beschädigte oder gebrochene Nähnadel gegen eine Ersatznähnadel auszutauschen. Vielmehr geschieht der Nadeltausch an der betroffenen Arbeitsstation, was die Unterbrechungsdauer des Herstellungsprozesses deutlich verringert.

Bei einem Ausführungsbeispiel des Wagens gemäß der vorliegenden Erfindung weist dieser einen Innenraum mit drei voneinander getrennten Aufbewahrungsbereichen auf. In einem ersten Aufbewahrungsbereich, der beispielsweise durch eine verschließbare Schublade gebildet sein kann, sind neue Ersatznähnadeln für den Nadeltausch gelagert. In einem zweiten Aufnahmebereich, der beispielsweise durch einen verschließbaren Aufnahmebehälter gebildet sein kann, werden gebrauchte, verschlissene oder beschädigte, aber ungebrochene Nadeln aufbewahrt. Ein dritter Aufbewahrungsbereich dient zur Lagerung von gebrochenen Nadeln. Durch die strikte Trennung der Aufbewahrungsbereiche wird ein versehentliches Durcheinanderbringen von Nadeln vermieden. Insbesondere gebrauchte, aber ungebrochene Nadeln werden nicht mit neuen Ersatznähnadeln verwechselt.

Vorzugsweise weist der Wagen eine Arbeitsfläche auf, auf der ein Behälter zur Aufnahme der Bruchstücke einer gebrochenen Nadel angeordnet werden kann. Mit Hilfe dieses Behälters wird geprüft, ob sämtliche Bruchstücke vorhanden sind. Anschließend werden die Bruchstücke aus dem Behälter entnommen und in eine Tüte oder ein ähnliches Behältnis eingeworfen, die anschließend versiegelt, beispielsweise zugeklebt wird. Die Bruchstücke werden dann in der Tüte oder ähnlichem in dem dritten Aufbewahrungsbereich des Wagens gelagert. Die Tüte kann nach dem Verschließen nicht mehr zerstörungsfrei geöffnet werden.

Auf der Arbeitsfläche mündet ein Kanal, ein Schacht oder ähnliches, der beispielsweise durch ein Rohr gebildet sein kann, aus. Ungebrochene, gebrauchte Nadeln können dort eingeworfen und über den Schacht in den zweiten Aufbewahrungsbereich für gebrauchte, ungebrochene Nadeln transportiert werden. Beispielsweise kann der Schacht oder der Kanal in einem Aufbewahrungsbehälter für gebrauchte, ungebrochene Nadeln enden.

Vorzugsweise ist der Zugang in den Innenbereich des Wagens über eine bewegbare Tür entweder zum Aufbewahrungsbereich für neue Nadeln oder zum Aufbewahrungsbereich für gebrauchte, ungebrochene Nadeln möglich. Der gleichzeitige Zugang zu beiden Aufbewahrungsbereichen wird über die Tür verhindert, so dass ein versehentliches Verwechseln oder Durcheinanderbringen von Ersatznähnadeln und gebrauchten, ungebrochenen Nadeln vermieden wird. Beispielsweise kann die Tür als Schiebetüre ausgeführt sein und entweder den Zugang zum ersten Aufbewahrungsbereich oder zum zweiten Aufbewahrungsbereich freigeben und den jeweils anderen Aufbewahrungsbereich verschließen.

Es kann außerdem ein Behälter zur Aufbewahrung von Bruchstücken einer gebrochenen Nadel, insbesondere einer Maschinennähnadel, vorhanden sein. Der Behälter weist einen Grundkörper und einen Deckel auf, die gemeinsam einen Aufnahmeraum begrenzen. Der Deckel kann beweglich, beispielsweise schwenkbar oder verschiebbar am Grundkörper gelagert sein. Der Deckel ist zwischen einer Offenstellung und einer Schließstellung bewegbar. Am Grundkörper ist mittelbar oder unmittelbar benachbart zum Aufnahmeraum ein Haltemagnet vorhanden. Der Haltemagnet ist insbesondere ein Permanentmagnet. Er erstreckt sich entlang einer Achse, beispielsweise entlang einer Längsmittelachse des Aufnahmeraums. Die in den Aufnahmeraum gelegten Bruchstücke der Nadel werden durch das Magnetfeld des Haltemagneten im Aufnahmeraum gehalten. Die Bruchstücke können beispielsweise sehr einfach entlang der Achse im Aufnahmeraum angeordnet werden.

Mit Hilfe des Behälters werden die Bruchstücke der Nadel zum Einen sicher im Aufnahmeraum gehalten und können auch beim Öffnen des Deckels nicht ohne Weiteres versehentlich herausfallen. Außerdem besteht die Möglichkeit, die Bruchstücke im Aufnahmeraum ausgerichtet anzuordnen, um schnell und sicher erkennen zu können, ob alle Bruchstücke der gebrochenen Nadel im Behälter vorhanden sind.

Vorzugsweise ist der Haltemagnet in einer Nut des Grundkörpers angeordnet. Die Nut erstreckt sich entlang der Achse und ist insbesondere zum Aufnahmeraum hin offen. Die dem Aufnahmeraum zugeordnete Oberseite des Haltemagneten schließt sich dadurch an eine Bodenfläche des Grundkörpers an, die dem Aufnahmeraum zugewandt ist. Die Oberseite des Magneten und die Bodenfläche des Grundkörpers können, müssen aber nicht stufen- oder kantenlos aneinander anschließen. Der Haltemagnet kann beispielsweise in die Nut eingeklebt sein.

Bei einem bevorzugten Ausführungsbeispiel ist die Bodenfläche des Grundkörpers zur Nut bzw. zum Haltemagneten hin geneigt. Ausgehend von den beiden sich parallel zu der Achse erstreckenden Seitenkanten der Bodenfläche neigt sich diese jeweils nach unten zum Haltemagneten hin. Ein in den Aufnahmeraum eingelegtes Bruchstück rutscht entlang der geneigten Bodenfläche dadurch automatisch zum Haltemagneten hin und wird dort sicher durch das Magnetfeld gehalten.

Im Aufnahmeraum ist zumindest an einer Stelle eine Anschlagfläche angeordnet, die vorzugsweise rechtwinklig zu der dem Aufnahmeraum zugewandten Oberseite des Haltemagneten bzw. rechtwinklig zu der Achse ausgerichtet ist. Die Anschlagfläche befindet sich vorzugsweise an einem axialen Ende des Haltemagneten. Die Bruchstücke der Nadel können geordnet ausgehend von der Anschlagfläche entlang der Achse angeordnet werden, wobei sich leichter erkennen lässt, ob alle Bruchstücke gefunden werden konnten.

Im Aufnahmeraum kann ferner eine Markierung, beispielsweise eine Skala oder eine zeichnerische, maßgenaue Abbildung vorhanden sein. Die Markierung dient zur Messung der Länge der gefundenen Bruchstücke und vereinfacht damit die Entscheidung, ob alle Bruchstücke der Nadel gefunden wurden. Insbesondere beginnt die Markierung unmittelbar an der Anschlagfläche. Die Bruchstücke lassen sich dann beispielsweise ausgehend von der Anschlagfläche geordnet aneinander anlegen, so dass schnell erfassbar ist, ob die Gesamtlänge der Bruchstücke der Gesamtlänge der Nadel entspricht. Dies erleichtert und beschleunigt weiter die Prüfung, ob die gebrochene Nähnadel vollständig aus dem textilen Werkstück entfernt werden konnten.

Die Markierung kann auf der Oberseite des Haltemagneten und/oder an der Bodenfläche des Grundkörpers vorhanden oder angebracht sein.

Vorzugsweise ist der Deckel des Behälters zwischen einer Schließstellung und einer Offenstellung bewegbar, beispielsweise verschiebbar oder schwenkbar am Grundkörper gelagert. Es können außerdem Haltemittel vorhanden sein, um den Deckel am Grundkörper in seiner Schließstellung zu halten. Die Haltemittel können durch Rastmittel oder andere Mittel gebildet sein, wobei insbesondere eine kraft- und/oder formschlüssige Verbindung zwischen einem Rastvorsprung oder einer Rastnoppe am Deckel oder am Grundkörper und einer Rastausnehmung am jeweils anderen Behälterteil in der Schließstellung des Deckels hergestellt wird.

Der Deckel kann bei einer bevorzugten Ausführungsform zumindest teilweise aus transparentem Material bestehen. Beispielsweise kann er vollständig transparent sein oder zumindest ein transparentes Sichtfenster aufweisen, so dass der Einblick in den Aufnahmeraum in der Schließstellung des Deckels möglich ist. An diesem Sichtfenster oder im transparenten Bereich kann ein Lupenteil vorhanden sein. Das Lupenteil ist vorzugsweise am Deckel so angeordnet, dass es sich in der Schließstellung des Deckels im Bereich über dem Haltemagneten befindet. Über das Lupenteil lassen sich die Bruchstücke der Nadel genauer betrachten, so dass insbesondere durch Begutachtung der Bruchstellen beurteilt werden kann, ob zwei Bruchstücke der Nadel unmittelbar aneinander anschließen oder nicht.

Im Aufnahmeraum des Behälters kann auch eine batteriegespeiste Lichtquelle angeordnet sein, um genügend Licht für die Betrachtung der Bruchstücke zu haben. Ein bei geschlossenem Deckel zugänglicher Schalter kann zum Ein- und Ausschalten der Lichtquelle dienen.

Ein vorstehend beschriebener Behälter eignet sich insbesondere zur Verwendung beim erfindungsgemäßen Verfahren zur Qualitätssicherung beim Nähen eines Textilteils. Dabei können einer oder mehrere der erfindungsgemäßen Behälter in dem zwischen den Arbeitstationen bewegbaren Wagen und/oder an jeder Arbeitsstation, an der genäht wird, vorhanden sein.

Vorteilhafte Ausgestaltungen des erfindungsgemäßen Verfahrens sowie des erfindungsgemäßen Wagens ergeben sich aus den abhängigen Ansprüchen und der Beschreibung. Die Beschreibung beschränkt sich auf wesentliche Merkmale der Erfindung. Die Zeichnung ist ergänzend heranzuziehen. Nachfolgend wird ein Ausführungsbeispiel des erfindungsgemäßen Behälters sowie des erfindungsgemäßen Verfahrens anhand der beigefügten Zeichnung im Einzelnen erläutert. Es zeigen:
Figur 1 ein Ausführungsbeispiel eines Behälters zur Aufbewahrung von Bruchstücken einer Nadel in perspektivischer Darstellung,
Figur 2 die schematische Darstellung der Bruchstücke einer Nadel,
Figur 3 den Grundkörper des Behälters aus Figur 1 mit Blick auf den offenen Aufnahmeraum,
Figur 4 eine blockschaltbildähnliche Darstellung eines Verfahrens zur Qualitätssicherung beim Nähen eines Textilteils und
Figur 5 eine schematische perspektivische Ansicht eines Ausführungsbeispiels eines Wagens zum Austausch von Nadeln an einer Näh-Arbeitsstation.

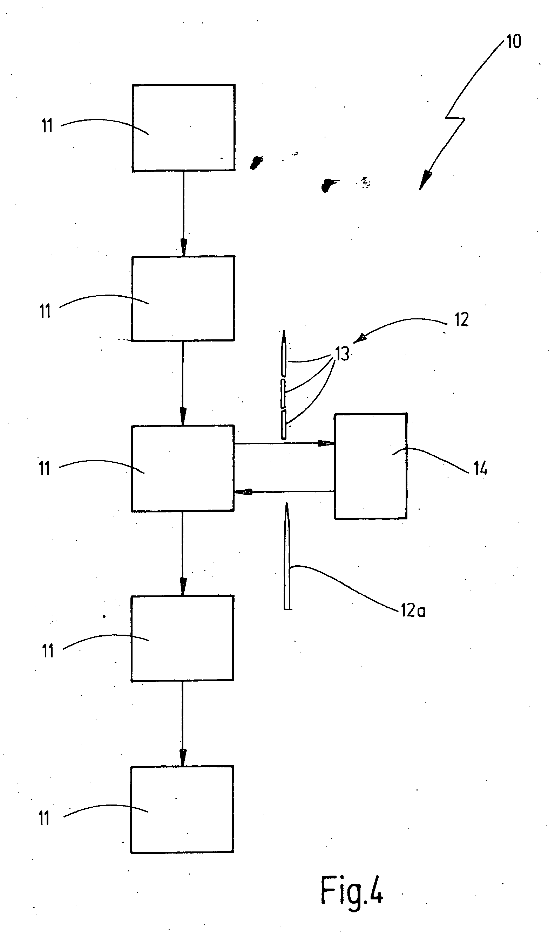

In Figur 4 ist schematisch der Ablauf eines Verfahrens 10 zur Qualitätssicherung beim Nähen eines Textilteils, beispielweise eines textilen Bekleidungsstücks veranschaulicht. Das Textilteil wird in mehreren Arbeitsstationen 11 hergestellt. Hierfür wird ein textiles Werkstück in einer vorgegebenen Reihenfolge von einer Arbeitsstation 11 zur nächsten Arbeitsstation 11 weitergegeben. Der Nähprozess ist erst beendet, wenn das textile Werkstück alle Arbeitsstationen 11 durchlaufen hat. In jeder Arbeitsstation 11 findet ein Nähvorgang am textilen Werkstück statt, bis schließlich nach Abschluss aller Arbeitsstationen das Textilteil hergestellt wurde.

Jede Arbeitstation 11 verfügt über eine Nähmaschine. Ersatznähnadeln sind in den Arbeitsstationen 11 nicht vorhanden. Es soll sichergestellt werden, dass beim Verschleiß, bei einer Beschädigung oder Bruch einer Nadel 12 nicht einfach eine Ersatznähnadel 12a eingesetzt und weiterbearbeitet wird. Es muss zunächst sichergestellt werden, dass schadhafte Nadel oder die Bruchstücke 13 der gebrochenen Nadel 12 aus der Arbeitsstation 11 und insbesondere dem textilen Werkstück entfernt wird bzw. werden.

Beim erfindungsgemäßen Verfahren ist hierfür ein zwischen den Arbeitsstationen 11 bewegbarer Wagen 14 vorhanden. Im Falle des Bruches einer Nadel 12 an einer Arbeitsstation 11 wird der Wagen 14 an die betreffende Arbeitsstation 11 bewegt. Der Wagen 14 nimmt die schadhafte Nadel bzw. die Bruchteile 13 der gebrochenen Nadel 12 auf. Nachdem geprüft und sichergestellt wurde, dass alle Bruchstücke 13 der gebrochenen Nadel 12 aus der Arbeitsstation 11 entfernt wurden, werden diese zunächst in den Wagen vereinnahmt. Dann wird aus dem Wagen 14 eine Ersatznähnadel 12a für die Arbeitsstation 11 bereitgestellt. Die an der betroffenen Arbeitsstation 11 arbeitende Person muss daher die Arbeitsstation 11 nicht verlassen. Der Nadelwechsel erfolgt unmittelbar an der Arbeitsstation 11.

Der zu verwendende Nadeltyp ist für jede Arbeitsstation 11 vorgegeben. Beispielsweise kann eine Kennzeichnung an der Arbeitsstation 11 oder der Nähmaschine vorhanden sein. Beim Austausch der Nadel im Falle einer Beschädigung oder eines Bruches ist daher sofort und eindeutig feststellbar, welche Ersatznadel 12a an die Arbeitsstation 11 ausgegeben werden muss.

Zur Aufnahme der Bruchstücke 13 der gebrochenen Nadel 12 ist an der Arbeitsstation und/oder im Wagen 14 zumindest ein Behälter 20 vorhanden. Jeder Behälter 20 weist einen Aufnahmeraum 21 für die Bruchstücke 13 auf, der durch einen Grundkörper 22 und einen Deckel 23 begrenzt wird. Der Deckel 23 ist zwischen einer den Aufnahmeraum 21 abschließenden Schließstellung und einer den Aufnahmeraum 21 zumindest teilweise freigebenden Offenstellung bewegbar. Jeder Behälter 20 ist nur zur Aufnahme der Bruchstücke 13 einer einzigen Nadel 12 vorgesehen. Nach dem Anordnen dieser Bruchstücke 13 in den Aufnahmeraum 21 wird der Deckel 23 in seine Schließstellung bewegt. Es kann mithilfe des Behälters 20 geprüft und sichergestellt werden, dass alle Bruchteile 13 der Nadel 12 gefunden und aus der Arbeitsstation 11 entfernt wurden.

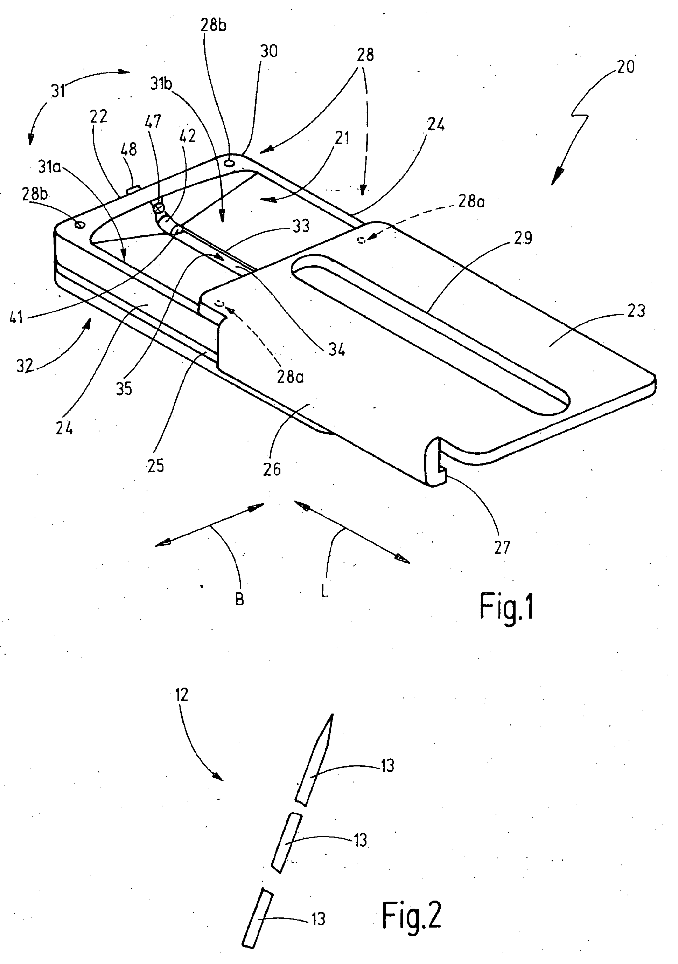

Einen Behälter 20, der für den Einsatz in dem Verfahren 10 besonders geeignet ist, veranschaulicht Figur 1. Dieser Behälter 20 eignet sich zum Aufnehmen der Bruchstücke 13 einer Nadel 12, beispielsweise einer Maschinennähnadel, wie sie im Verfahren 10 eingesetzt wird, ist jedoch auch für andere Maschinennadeln grundsätzlich geeignet. Eventuell muss die Abmessung des Behälters 20 an die Größe der Nadel 12 angepasst werden.

Der Deckel 23 ist im Ausführungsbeispiel bewegbar am Grundkörper 22 gelagert. Hierfür sind an zwei entgegengesetzten Längsseiten 24 des Grundkörpers 22 jeweils eine sich in Längsrichtung L erstreckende Führungsnut 25 vorhanden. Jeder Führungsnut 25 ist ein Seitenflansch 26 mit einem Führungsvorsprung des Deckels 23 zugeordnet. In jede Führungsnut 25 greift ein Führungsvorsprung 27 ein. Die Führungsnut 25 und der Führungsvorsprung 27 sind beim Ausführungsbeispiel im Querschnitt rechteckförmig.

Der Deckel 23 lässt sich mithin in Längsrichtung L entlang des Grundkörpers 22 zwischen seiner Schließstellung und seiner Offenstellung verschieben. Alternativ hierzu wäre es auch möglich, den Deckel 23 über Gelenke schwenkbar am Grundkörper 22 anzuordnen und den Deckel 23 zwischen der Offen- und Schließstellung in einer Schwenkbewegung zu bewegen.

Am Deckel 23 und dem Grundkörper 22 ist ein Haltemittel 28 vorhanden, das den Deckel 23 am Grundköper 22 in seiner Schließstellung hält bzw. sichert. Das Haltemittel 28 kann als Rastmittel ausgeführt sein. Bei dem hier dargestellten Ausführungsbeispiel weist das Haltemittel wenigstens eine Rastnoppe 28a am Deckel 23 und/oder am Grundkörper 22 und jeweils eine zugeordnete Rastaussparung 28b am jeweils anderen Behälterteil auf. Beispielsgemäß sind an der dem Grundkörper 22 zugewandten Seite des Deckels 23 Rastnoppen 28a vorhanden, die jeweils einer Rastaussparung 28b am Grundkörper 22 zugeordnet sind. In der Schließstellung greifen die Rastnoppen 28a in die Rastaussparungen 28b ein, um den Deckel 23 in seiner Schließstellung zu halten und ein versehentliches Öffnen zu vermeiden.

Der Deckel 23 kann teilweise oder vollständig aus transparentem Material bestehen, so dass in der Schließstellung des Deckels 23 der Einblick in den Aufnahmeraum 21 möglich ist. Beispielsweise kann im Bereich des Deckels 23 ein transparentes Sichtfenster vorhanden sein. Bei dem in Figur 1 dargestellten Ausführungsbeispiel ist ein solches Sichtfenster als Lupenteil 29 ausgestaltet. Dadurch lassen sich die Bruchstücke 13 der im Aufnahmeraum 21 vorhandenen Nadel 12 vergrößert und mithin genauer betrachten. Es lässt sich dabei leichter entscheiden, ob zwei Bruchstücke 13 unmittelbar aneinander anschließen. Hierfür können die Bruchflächen bzw. Bruchkanten durch das Lupenteil 29 genauer betrachtet werden.

In Abwandlung zu dem in Figur 1 dargestellten Ausführungsbeispiel könnten auch zusätzlich zum Lupenteil 29 weitere Teile oder der gesamte Deckel 23 aus transparentem Material hergestellt sein.

Der Aufnahmeraum 21 ist beim Ausführungsbeispiel als Vertiefung im Grundkörper 22 ausgeführt. Der Grundkörper 22 weist einen dem Deckel 23 zugeordneten ringsumlaufenden Rand 30 auf, wobei der Deckel 23 in seiner Schließstellung vorzugsweise ringsumlaufend am Rand 30 anliegt und den Aufnahmeraum 21 dadurch verschließt. Eine Bodenfläche 31 des Grundkörpers 22 ist dem Aufnahmeraum 21 zugewandt. Sie weist einen ersten Flächenabschnitt 31a und einen zweiten Flächenabschnitt 31b auf. Die beiden Flächenabschnitte 31a, 31b sind durch eine an einem Boden 32 angeordnete und beim Ausführungsbeispiel die Bodenfläche 31 durchsetzende Nut 33 voneinander getrennt. Ausgehend von der Nut 33 verlaufen die beiden Flächenabschnitte 31a, 31b schräg nach oben zu dem sich in Längsrichtung L erstreckenden Abschnitt des Randes 30 hin. Ein Bruchstück 13, das auf einem Flächenabschnitt 31a, 31b der Bodenfläche 31 abgelegt wird, rutscht durch deren Neigung zur Nut 33 hin.

Die Nut 33 erstreckt sich beispielsgemäß in Längsrichtung L vorzugsweise durch den gesamten Aufnahmeraum 21. Die Nut 33 dient zum Anordnen eines Haltemagneten 34 am Grundkörper 22. Die Querschnittsform der Nut 33 ist an die Querschnittsform des Haltemagneten 34 angepasst. Vorzugsweise füllt der Haltemagnet 34 die Nut 33 zumindest in Breitenrichtung B quer zur Längsrichtung im Wesentlichen vollständig aus. Eine an den Aufnahmeraum 21 angrenzende Oberseite 35 des Haltemagneten 34 schließt an die beiden Flächenabschnitte 31a, 31b der Bodenfläche 31 des Grundkörpers 22 an. Der Übergang zwischen den Flächenabschnitten 31a, 31b und der Oberseite 35 kann stufenlos erfolgen. Beim Ausführungsbeispiel besteht eine kleine Stufe zwischen der Oberseite 35 und den Flächenabschnitten 31a, 31b. Es ist von Vorteil, wenn der Haltemagnet 34 zumindest nicht aus der Nut 33 herausragt, so dass Bruchstücke 13 über die Flächenabschnitte 31a, 31b auf die Oberseite 35 des Haltemagneten 34 rollen oder rutschen können.

Sofern der Deckel 23 ein transparentes Sichtfenster und/oder ein Lupenteil 29 aufweist, kann sich dieses in der Schließstellung des Deckels 23 oberhalb des Haltemagneten 34 befinden.

Der Haltemagnet 34 ist ein Permanentmagnet. Sein Magnetfeld durchsetzt zumindest einen Teil des Aufnahmeraums 21. In den Aufnahmeraum 21 gelegte magnetisierbare Bruchstücke 13 einer Nadel 12 werden durch das Magnetfeld erfasst und angezogen.

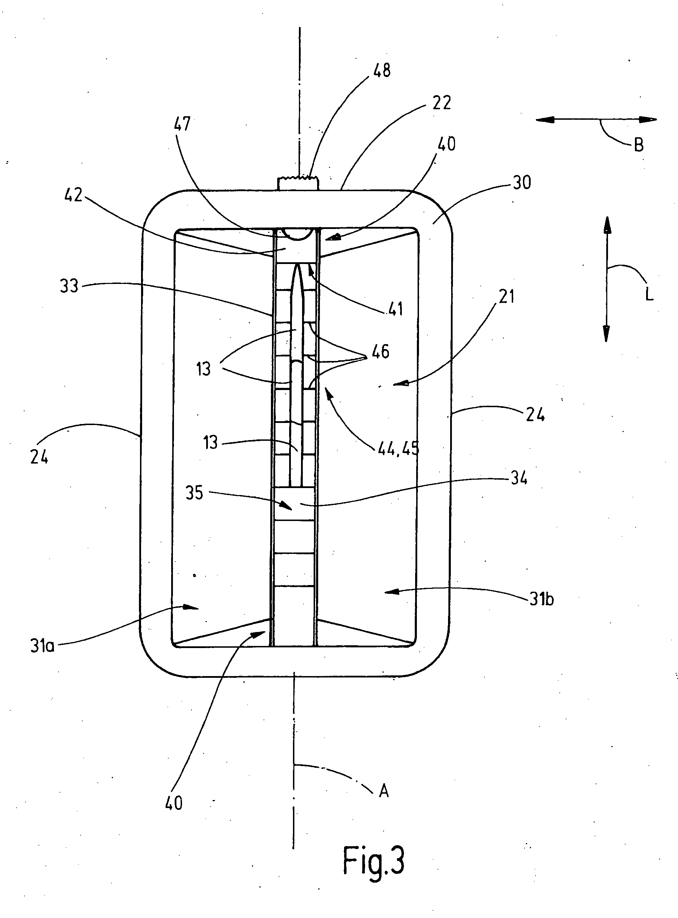

Der Haltemagnet 34 erstreckt sich entlang einer Achse A in Längsrichtung L (Figur 3). Im Bereich eines der beiden axialen Enden 40 des Haltemagneten 34 befindet sich eine Anschlagfläche 41, die beim Ausführungsbeispiel rechtwinklig von der Oberseite 35 des Haltemagneten 34 wegragt. Die Anschlagfläche 41 ist an einem Anschlagteil 42 des Grundkörpers 22 vorhanden, das in Figur 1 zu erkennen ist. Die Form des Anschlagteils 42 ist grundsätzlich beliebig wählbar. Bei dem in Figur 1 dargestellten Ausführungsbeispiel ist das Anschlagteil 42 in etwa halbzylindrisch ausgeführt. Die Breite des Anschlagteils 42 in Breitenrichtung B quer zur Längsrichtung L gemessen entspricht der Breite der Nut 33 und/oder der Oberseite 35 des Haltemagneten 34.

Wie in Figur 3 veranschaulicht, ist im Aufnahmeraum 21 außerdem eine Markierung 44 und beispielsgemäß eine Skala 45 mit wenigstens einer und beispielsgemäß mehreren Skalenelementen 46 angeordnet. Die Skalenelemente 46 sind beispielsgemäß als Skalenstriche ausgeführt. Die Markierung 44 ist im Bereich der Achse A in Längsrichtung L in vorgegebenen Abständen gegenüber den Anschlagfläche 41 vorhanden. Die dienen dazu, die Länge der Bruchstücke 13 einer Nadel 12 und insbesondere die Gesamtlänge aller im Aufnahmeraum 21 angeordneten Bruchstücke 13 schnell mit der bekannten Länge der unbeschädigten Nadel 12 vergleichen zu können. Insbesondere ist jeweils ein Skalenelement 46 im Abstand der Länge jeder verwendeten Nadel 12 im Aufnahmeraum 21 angebracht.

Bei dem hier dargestellten Ausführungsbeispiel befindet sich die als Skala 45 ausgeführte Markierung 44 unmittelbar auf der Oberseite 35 des Haltemagneten 34. Alternativ oder zusätzlich könnten die Markierung 44 auch an der Bodenfläche 31 benachbart zum Haltemagneten 34 vorgesehen sein. Anstelle einer Skala 45 könnte auch eine beliebige andere Markierung 44 im Aufnahmeraum 21 vorhanden sein. Beispielsweise könnte als Markierung 44 auch eine zeichnerische formgetreue Darstellung der Nadel dienen, so dass durch Längen und/oder Formvergleich schnell erkannt werden kann, ob sämtliche Bruchstücke 13 der Nadel 12 vorhanden sind.

Bricht eine Nadel, insbesondere einen Maschinennähnadel ab, so werden die Bruchstücke 13 der beschädigten Nadel 12 (Figur 2) eingesammelt und in den Aufnahmeraum 21 des Behälters 20 eingelegt. Die Bruchstücke 13 werden vorzugsweise anhand der Bruchstellen so aneinander gelegt, wie es der ursprünglichen und gebrochenen Nadel 12 entspricht. Ein Ende eines Bruchstücks 13, beispielsweise die Nadelspitze oder das Schaftende der Nadel 12, werden dabei an die Anschlagfläche 41 angelegt (Figur 3). Daran schließen sich die weiteren Bruchstücke 13 geordnet in der Reihenfolge an, wie sie ursprünglich miteinander verbunden waren, was anhand der Bruchstellen und der Form der Bruchstücke festgestellt werden kann. Über die Markierung 44 kann sofort die Gesamtlänge und/oder die Form aller angeordneten Bruchstücke 13 erfasst werden. Zumindest lässt sich die Gesamtlänge bzw. die Form der Bruchstücke 13 mit der bekannten Gesamtlänge bzw. Form der unbeschädigten Nadel 12 vergleichen. Dadurch kann sehr schnell erfasst werden, ob alle Bruchstücke 13 der gebrochenen Nadel 12 gefunden und in den Behälter 20 eingelegt wurden. Ist dies der Fall, werden alle Bruchstücke 13 in eine Tüte eingelegt und die Tüte wird zugeklebt. Die Tüte kann nach dem Zukleben nicht mehr zerstörungsfrei geöffnet werden. Der Nadeltausch wird dokumentiert und die Tüte mit den Bruchstücken gemeinsam mit der Dokumentation aufbewahrt. Der Herstellungsprozess kann dann mit einer Ersatznähnadel 12a fortgesetzt werden, da alle Bruchstücke 13 aus dem bearbeiteten textilen Werkstück entfernt wurden.

Im Aufnahmeraum 21 des Behälters 20 kann auch eine batteriegespeiste Lichtquelle 47 angeordnet sein, um genügend Licht für die Betrachtung der Bruchstücke 13 zu haben. Ein bei geschlossenem Deckel 23 zugänglicher Schalter 48 kann zum Ein- und Ausschalten der Lichtquelle 47 dienen. Die Batterie zum Betreiben der Lichtquelle kann beispielsweise im Grundkörper 22 angeordnet sein. Die Lichtquelle 47 und der Schalter 48 sind in Figuren 1 und 3 beispielhaft stark schematisiert dargestellt. Als Lichtquelle 47 kann beispielsweise eine Leuchtdiode dienen. Es können im Aufnahmeraum 21 auch an verschiedenen Stellen Lichtquellen 47 angeordnet werden.

In den Fällen, in denen Bruchstücke 13 einer gebrochenen Nadel 12 an der Arbeitsstation 11 nicht gefunden werden, ist der Transport des textilen Werkstücks zu einem Nadeldetektorraum notwendig. Beim erfindungsgemäßen Verfahren wird hierfür ein abschließbarer Container verwendet. Dadurch wird verhindert, dass Bruchteile 13 beim Transport des textilen Werkstücks verloren werden. Der Boden des Containers ist vorzugsweise schwarz, um ein leichteres Erkennen von Bruchteilen 13 zu ermöglichen. Vorzugsweise ist der Container außerdem mit einem Magnetbesen ausgestattet, der dazu dient, den Innenraum bzw. den Boden des Containers nach Bruchteilen 13 abzusuchen. Dies verhindert, dass Bruchstücke 13 im Container verbleiben und das vom Nadeldetektorraum an die Arbeitsstation 11 zurücktransportierte textile Werkstück möglicherweise erneut mit einem Bruchteil 13 kontaminiert wird.

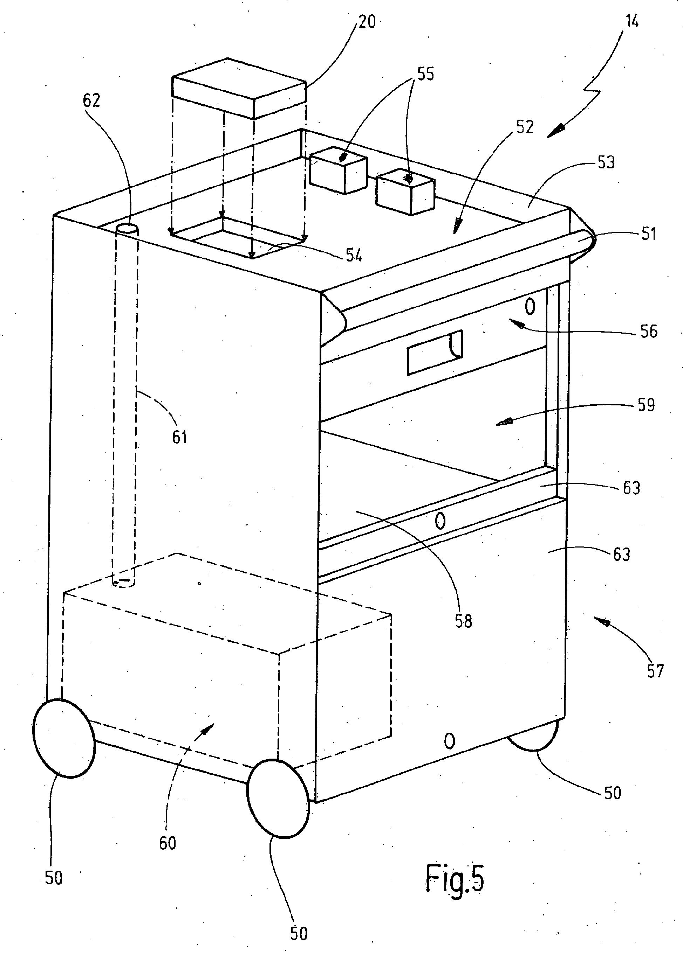

In Figur 5 ist schematisch eine perspektivische Darstellung des Wagens 14 veranschaulicht. Der Wagen 14 weist im Bereich seines Bodens feststehende und/oder um eine Hochachse schwenkbare Rolle 50 auf. Mithilfe dieser Rollen 50 kann der Wagen 14 geschoben werden. Beim Ausführungsbeispiel handelt es sich um einen manuell bewegbaren Wagen 14. Zum Schieben weist dieser im Bereich seiner Oberseite einen Griff 51 auf. Die Oberseite des Wagens 14 weist eine Arbeitsfläche 52 auf oder ist durch eine solche Arbeitsfläche 52 gebildet. Die Arbeitsfläche 52 ist dunkel und vorzugsweise schwarz, um die feinen, silbrig hellen Bruchstücke 13 bzw. Nadeln 12 besser erkennen zu können. Die Arbeitsfläche 52 ist beim Ausführungsbeispiel von einem ringsumlaufenden Rand 53 umschlossen, so dass keine Bruchstücke 13 oder Nadeln 12 versehentlich von der Arbeitsfläche 52 herunterfallen können.

Im Bereich der Arbeitsfläche 52 des Wagens 14 ist beim dargestellten Ausführungsbeispiel außerdem eine Vertiefung 54 vorhanden, die zur zumindest teilweisen Aufnahme eines Behälters 20 dient. Über die Vertiefung 54 kann der Behälter 20 sozusagen gegen Verrutschen auf der Arbeitsfläche 52 gesichert werden. Anstelle der Vertiefung 54 könnten auch andere Mittel, wie Vorsprünge oder dergleichen zur Anordnung des Behälters 20 auf der Arbeitsfläche 52 dienen.

Auf der Arbeitsfläche 52 können außerdem weitere Behältnisse 55 vorhanden sein, die beispielsweise verschließbare Tüten enthalten, in denen Bruchstücke zur Aufbewahrung und Dokumentation des Nadeltauschs gelagert werden können. Außerdem kann ein Behältnis 55 zur Aufnahme von Müll dienen. Beispielsweise können die Tüten einen selbstklebenden Falz aufweisen, der durch eine Folie oder einen Streifen abgedeckt ist. Nach dem Freilegen dieses selbstklebenden Falzes vor dem Zukleben der Tüte bleibt die Folie oder der Streifen übrig, der in das entsprechende Behältnis 55 eingeworfen werden kann.

Im Innenraum des Wagens 14 ist außerdem eine Schublade 56 angeordnet, die von der Vorderseite 57 des Wagens 14 her zugänglich ist. In der Schublade 56 befinden sich ungebrauchte neue Nadeln 12, also Ersatznähnadeln 12a. Die Schublade 56 stellt somit beispielsgemäß einen ersten Aufnahmebereich des Wagens 14 dar. Die Schublade 56 ist vorzugsweise abschließbar. Dadurch kann der Zugang zu Ersatznähnadeln 12a durch Unbefugte vermieden und eine vollständige Dokumentation über jeden Nadeltausch sichergestellt werden.

Der Innenraum des Wagens 14 ist durch einen Zwischenboden 58 unterteilt. In einem oberen Bereich 59 oberhalb des Zwischenbodens 58 des Innenraums können weitere Gegenstände angeordnet werden, zum Beispiel eine Schreibunterlage bzw. ein Klemmbrett, Schreibutensilien oder dergleichen. Außerdem dient dieser obere Bereich 59 dazu, in verschlossenen Tüten aufbewahrte Bruchstücke 13 und die Dokumentation über den Nadeltausch aufzubewahren. dieser Bereich 59 bildet einen dritten Aufnahmebereich des Wagens 14.

Unterhalb des Zwischenbodens 58 ist beispielsgemäß der zweite Aufnahmebereich des Wagens 14 vorhanden und insbesondere durch einen Aufbewahrungsbehälter 60 für gebrauchte, verschlissene oder beschädigte, aber nicht gebrochene Nadeln gebildet. Dieser Aufbewahrungsbehälter 60 ist über einen Schacht oder Kanal, beispielsweise ein Rohr 61 mit der Arbeitsfläche 52 verbunden. Dort ist eine Mündung 62 des Schachtes bzw. Rohres 61 vorhanden. Gebrauchte, beschädigte und nicht gebrochene Nadeln können durch die Mündung 62 an der Arbeitsfläche 52 über das Rohr 61 in den Aufbewahrungsbehälter 60 eingeworfen werden.

An der Vorderseite 57 des Wagens 14 befindet sich wenigstens eine Tür zum Verschließen des Innenbereichs des Wagens 14. Beim Ausführungsbeispiel sind zwei versetzt angeordnete Schiebtüren 63 vorhanden. Die Schiebetüren 63 sind beispielsgemäß vertikal verschiebbar hintereinander angeordnet. Abhängig von der Stellung der beiden Schiebetüren 63 ist entweder der obere Bereich 59 des Innenraums oberhalb des Zwischenbodens 58 oder der darunterliegende Bereich mit dem Aufbewahrungsbehälter 60 für gebrauchte, jedoch nicht gebrochene Nadeln zugänglich. Dadurch ist sichergestellt, dass entweder neue Nadeln aus der Schublade 56 oder gebrauchte Nadeln aus dem Aufnahmeraum 60 entnommen werden können. Ein gleichzeitiger Zugang zur Schublade 56 und dem Aufbewahrungsbehälter 60 ist durch die beiden Schiebetüren 63 vermieden. Dies hat den Vorteil, dass ein versehentliches Vertauschen von neuen und gebrauchten, ungebrochenen Nadeln nicht möglich ist.

Zum Tausch einer gebrochenen Nadel gegen eine Ersatznähnadel 12a wird mithilfe des Behälters 20 und insbesondere der darin angeordneten Markierung 44 zunächst geprüft, ob sämtliche Bruchstücke 13 vorhanden sind. Ist dies der Fall, wird aus einem Behältnis 55 ein eine Tüte entnommen und die Bruchstücke 13 darin angeordnet. Anschließend wird die Tüte über einen selbstklebenden Falz verschlossen und lässt sich dann nicht mehr zerstörungsfrei öffnen. Diese Tüte wird zu Dokumentationszwecken auf ein Dokumentationsblatt aufgeklebt und im oberen Bereich 59 verstaut. Anschließend kann eine Ersatznadel 12a aus der Schublade 56 entnommen und an die Arbeitsstation 11 übergeben werden. Ist eine Nadel 12 nicht gebrochen, sondern lediglich verschlissen, aber vollständig wird diese über die Mündung 62 in den Aufbewahrungsbehälter 60 eingeworfen und anschließend aus der Schublade 56 eine neue Nähnadel entnommen und als Ersatznähnadel 12a an die Arbeitsstation 11 übergeben. Über den Wagen 14 lassen sich daher gebrochene bzw. beschädigte und nicht gebrochene bzw. neue Nadeln strikt voneinander trennen.

In dem Wagen 14 kann außerdem ein Magnetbesen zum Auffinden und Entfernen der Bruchstücke 13 aus der Arbeitsstation bzw. dem textilen Werkstück vorhanden sein.

Die Erfindung betrifft ein Verfahren 10 zum Nähen eines Textilteils. Das Nähen erfolgt sequenziell in mehreren Arbeitsstationen 11. Ein Wagen 14 ist vorgesehen, der zwischen den Arbeitsstationen 11 bewegbar ist. Bricht eine Nadel 12 in einer Arbeitsstation 11 ab, wird der Wagen 14 an diese Arbeitsstation 11 bewegt. Die Bruchteile 13 der Nadel 12 werden in einem Behälter 20 angeordnet und der Behälter wird an den Wagen 14 übergeben. Wenn festgestellt wurde, dass alle Bruchteile 13 aus der Arbeitsstation 11 entfernt wurden, wird eine Ersatznähnadel 12a aus dem Wagen 14 entnommen und für diese Arbeitsstation bereitgestellt. Außerdem betrifft die Erfindung einen Behälter 20 zur Aufnahme der Bruchteile 13 der Nadel 12. Der Behälter 20 weist einen Aufnahmeraum 21 auf, der von einem Grundkörper 22 und einem Deckel 23 begrenzt ist. Im Bereich eines Bodens 32 des Grundkörpers 22 ist ein sich entlang einer Achse A erstreckender Haltemagnet 34 angeordnet. Über dessen Magnetfeld werden magnetisierbare Bruchteile 13 einer Nadel 12 im Bereich der Achse A im Aufnahmeraum 21 gehalten.

### Bezugszeichenliste:

- 10: Verfahren
- 11: Arbeitsstation
- 12: Nadel
- 12a: Ersatznähnadel
- 13: Bruchstück
- 14: Wagen

- 20: Behälter
- 21: Aufnahmeraum
- 22: Grundkörper
- 23: Deckel
- 24: Längsseite des Grundkörpers
- 25: Führungsnut
- 26: Seitenflansch
- 27: Führungsvorsprung
- 28: Haltemittel
- 28a: Rastnoppe
- 28b: Rastaussparung
- 29: Lupenteil

- 30: Rand am Grundkörper
- 31: Bodenfläche
- 31a: erster Flächenabschnitt
- 31b: zweiter Flächenabschnitt
- 32: Boden des Grundkörpers
- 33: Nut
- 34: Haltemagnet
- 35: Oberseite

- 40: axiales Ende des Haltemagneten
- 41: Anschlagfläche
- 42: Anschlagteil
- 44: Markierung
- 45: Skala
- 46: Skalenelement
- 47: Lichtquelle
- 48: Schalter

- 50: Rolle
- 51: Griff
- 52: Arbeitsfläche
- 53: Rand
- 54: Vertiefung
- 55: Behältnis
- 56: Schublade
- 57: Vorderseite
- 58: Zwischenboden
- 59: oberer Bereich
- 60: Aufbewahrungsbehälter
- 61: Rohr
- 62: Mündung

- A: Achse
- B: Breitenrichtung
- L: Längsrichtung

## Patentansprüche

1. Verfahren zur Qualitätssicherung beim Nähen eines Textilteils,
mit mehreren Arbeitsstationen (11) an denen jeweils ein Nähvorgang durchgeführt wird, wobei ein textiles Werkstück die Arbeitsstationen (11) in einer vorgegebenen Reihenfolge durchläuft,
mit einem zwischen den Arbeitsstationen bewegbaren Wagen (14), der im Falle eines Nadelbruches an einer Arbeitsstation (11) die Bruchstücke (13) einer gebrochenen Nähnadel (12) aufnimmt und eine Ersatz-Nähnadel (12a) für die Arbeitsstation (11) bereitstellt.

2. Verfahren nach Anspruch 1,
**dadurch gekennzeichnet, dass** vor dem Bereitstellen der Ersatz-Nähnadel (12a) für die Arbeitsstation (11) geprüft wird, ob die ausgetauschte Nadel (12) vollständig ist und keine Bruchstücke (13) in der Arbeitsstation (11) oder dem Werkstück zurückgeblieben sind und erst wenn sies bestätigt wurde anschließend die ErsatzNähnadel (12a) für die Arbeitsstation (11) freigegeben wird.

3. Verfahren nach Anspruch 1 oder 2,
**dadurch gekennzeichnet, dass** der Wagen (14) wenigstens einen Behälter (20) zur Aufbewahrung von Bruchstücken (13) einer Nadel (12) aufweist.

4. Verfahren nach Anspruch 3,
**dadurch gekennzeichnet, dass** in jedem Behälter (20) nur die Bruchstücke (13) einer einzigen Nadel (12) angeordnet werden.

5. Wagen (14), der zur Durchführung des Verfahrens gemäß der Patentansprüche 1 bis 4 und der zum Austauschen von beschädigten oder gebrochenen Nadeln (12) gegen eine Ersatznähnadel (12a) an einer Arbeitsstation (11) eingerichtet ist, in der ein Nähvorgang an einem textilen Werkstück durchgeführt wird,
mit einer Innenraum, der einen ersten Aufbewahrungsbereich (56) für Ersatznähnadeln (12a), einen zweiten Aufbewahrungsbereich (60) für gebrauchte, ungebrochene Nadeln (12) und einen dritten Aufbewahrungsbereich (59) für Bruchstücke (13) einer gebrochenen Nadel (12) aufweist, wobei alle Aufbewahrungsbereiche (56, 59, 60) voneinander getrennt sind,
wobei an einer Arbeitsfläche (52) des Wagens (14) ein Kanal oder Rohr (61) ausmündet, der bzw. das mit dem zweiten Aufbewahrungsbereich (60) oder einem Aufbewahrungsbehälter (60) für gebrauchte ungebrochene Nadeln (12) verbunden ist.

6. Wagen nach Anspruch 5,
**dadurch gekennzeichnet, dass** der Aufbewahrungsbereich für Ersatznähnadeln (12a) und/oder der Aufbewahrungsbereich für gebrauchte, ungebrochene Nadeln (12) durch einen im Innenbereich des Wagens (14) angeordneten schließbaren Behälter (56, 60) gebildet ist.

7. Wagen nach einem der Ansprüche 5 oder 6,
**dadurch gekennzeichnet, dass** der Wagen wenigstens eine zwischen zwei Stellungen bewegbare Tür (63) aufweist, wobei die Tür (63) in der einen Stellung den Zugang zu dem Aufbewahrungsbereich (56) für Ersatznähnadeln (12a) ermöglicht und den Zugang zu dem Aufbewahrungsbereich (60) für gebrauchte ungebrochene Nadeln (12) verhindert und in der jeweils anderen Stellung den Zugang zu dem Aufbewahrungsbereich (56) für Ersatznähnadeln (12a) verhindert und den Zugang zu dem Aufbewahrungsbereich (60) für gebrauchte ungebrochene Nadeln (12) ermöglicht.

## Claims

1. Method for quality assurance when sewing a textile part,
with multiple work stations (11), at which a sewing operation is respectively being conducted, wherein a textile work piece passes through the work stations (11) in a predetermined sequence,
with a carriage (14), which is movable between the work stations and which in the event of a needle breaking at a work station (11) receives the fragments (13) of a broken sewing needle (12) and provides a replacement sewing needle (12a) for the work station (11).

2. Method according to claim 1, **characterised in that** before providing the replacement sewing needle (12a) for the work station (11) it is checked whether the exchanged needle (12) is complete and that no fragments (13) are left behind in the work station (11) or the work piece, and only when this has been confirmed will the replacement sewing needle (12a) then be released for the work station (11).

3. Method according to claim 1 or 2, **characterised in that** the carriage (14) has at least one container (20) for storing the fragments (13) of a needle (12).

4. Method according to claim 3, **characterised in that** only the fragments (13) of a single needle (12) are arranged in each container (20).

5. Carriage (14), which is fitted for conducting the method according to claims 1 to 4 and for exchanging damaged or broken needles (12) for a replacement needle (12a) at a work station (11), in which a sewing operation is being conducted on a textile work piece,
with an interior, which has a first storage area (56) for replacement needles (12a), a second storage area (60) for used unbroken needles (12) and a third storage area (59) for fragments (13) of a broken needle (12), wherein all the storage areas (56, 59, 60) are separated from one another,
wherein a conduit or pipe (61), which is connected to the second storage area (60) or a storage container (60) for used unbroken needles (12), opens at a work station (52) of the carriage (14).

6. Carriage according to claim 5, **characterised in that** the storage area for replacement sewing needles (12a) and/or the storage area for used unbroken needles (12) is/are formed by a closable container (56, 60) arranged in the inside area of the carriage (14).

7. Carriage according to one of claims 5 or 6, **characterised in that** the carriage has at least one door (63), which is movable between two positions, wherein in one position the door (63) allows access to the storage area (56) for replacement sewing needles (12a) and prevents access to the storage area (60) for used unbroken needles (12) and in the respective other position prevents access to the storage area (56) for replacement sewing needles (12a) and allows access to the storage area (60) for used unbroken needles (12).

## Revendications

1. Procédé d'assurance qualité lors de la couture d'une pièce textile,
comprenant plusieurs postes de travail (11), sur lesquels est exécutée respectivement une opération de couture, une pièce textile parcourant les postes de travail (11) dans un ordre prédéterminé,
comprenant un chariot (14) qui peut être déplacé entre les postes de travail et qui, en cas de rupture d'aiguille dans un poste de travail (11), recueille les fragments (13) d'une aiguille à coudre (12) cassée et prépare une aiguille à coudre de remplacement (12a) pour le poste de travail (11).

2. Procédé selon la revendication 1, **caractérisé en ce que**, avant la préparation de l'aiguille à coudre de remplacement (12a) pour le poste de travail (11), on vérifie si l'aiguille (12) remplacée est complète et qu'il ne subsiste pas de fragments (13) dans le poste de travail (11) ou dans la pièce, et ce n'est que lorsque cela est confirmé que l'aiguille à coudre de remplacement (12a) est ensuite libérée pour le poste de travail (11).

3. Procédé selon la revendication 1 ou 2, **caractérisé en ce que** le chariot (14) présente au moins un récipient (20) destiné à conserver des fragments (13) d'une aiguille (12).

4. Procédé selon la revendication 3, **caractérisé en ce que** dans chaque récipient (20) ne sont disposés que les fragments (13) d'une seule aiguille (12).

5. Chariot (14) qui est conçu pour la mise en oeuvre du procédé selon les revendications 1 à 4 et qui est conçu pour l'échange d'aiguilles (12) endommagées ou cassées, contre une aiguille à coudre de remplacement (12a), dans un poste de travail (11) dans lequel une opération de couture est exécutée sur une pièce textile,
comprenant un espace intérieur qui présente une première zone de conservation (56) pour des aiguilles à coudre de remplacement (12a), une deuxième zone de conservation (60) pour des aiguilles (12) usagées non cassées, et une troisième zone de conservation (59) pour des fragments (13) d'une aiguille (12) cassée, toutes les zones de conservation (56, 59, 60) étant séparées les unes des autres,
sachant que sur une surface de travail (52) du chariot (14), débouche un canal ou un tube (61) qui est relié à la deuxième zone de conservation (60) ou à un récipient de conservation (60) destiné à des aiguilles (12) usagées non cassées.

6. Chariot selon la revendication 5, **caractérisé en ce que** la zone de conservation pour aiguilles à coudre de remplacement (12a) et/ou la zone de conservation pour aiguilles (12) usagées non cassées est/sont constituée(s) d'un récipient (56, 60) pouvant être fermé, qui est disposé dans l'espace intérieur du chariot (14).

7. Chariot selon l'une des revendications 5 ou 6, **caractérisé en ce que** le chariot présente au moins une porte (63) pouvant être déplacée entre deux positions, sachant que dans une position, la porte (63) autorise l'accès à la zone de conservation (56) pour aiguilles à coudre de remplacement (12a) et interdit l'accès à la zone de conservation (60) pour aiguilles (12) usagées non cassées, et dans l'autre position respective, interdit l'accès à la zone de conservation (56) pour aiguilles à coudre de remplacement (12a) et autorise l'accès à la zone de conservation (60) pour aiguilles (12) usagées non cassées.
